**Europäisches Patentamt**

**European Patent Office**

**Office européen des brevets**

(19)

(11) Numéro de publication : **0 491 588 A1**

(12) # DEMANDE DE BREVET EUROPEEN

(21) Numéro de dépôt : **91403198.4**

(22) Date de dépôt : **26.11.91**

(51) Int. Cl.$^5$ : **B23D 31/04,** B23D 33/02

(30) Priorité : **18.12.90 FR 9015865**

(43) Date de publication de la demande :
**24.06.92 Bulletin 92/26**

(84) Etats contractants désignés :
**AT BE CH DE DK ES FR GB GR IT LI LU NL SE**

(71) Demandeur : **GTS INDUSTRIES**
**rue du Comte Jean**
**F-59760 Grande-Synthe (FR)**

(72) Inventeur : **Millescamps, Philippe**
**9, allée des Prêtres, Brouckerque**
**F-59630 Bourbourg (FR)**
Inventeur : **Wszolek, René**
**11, rue Bertrand Russel**
**F-59760 Grande-Synthe (FR)**

(74) Mandataire : **Polus, Camille et al**
**c/o Cabinet Lavoix 2, Place d'Estienne d'Orves**
**F-75441 Paris Cedex 09 (FR)**

(54) **Procédé et dispositif de positionnement d'une tôle dans une installation de traitement en ligne.**

(57)    L'invention concerne un procédé et un dispositif de positionnement d'une tôle (1) devant un outil (2) dans une installation de traitement en ligne comportant des organes de déplacement longitudinal de la tôle et des organes de positionnement transversal de la tôle (1) devant l'outil (2) actionnés par un opérateur, caractérisé en ce que l'on réalise les étapes suivantes :

— a) dans une première opération, on mesure le contour longitudinal de la tôle (1,10) au moyen d'une jauge de forme (11) en amont de l'outil (2) ;

— b) dans une seconde opération, à partir des mesures effectuées par la jauge de forme, on calcule des écarts transversaux $(X_1, X_2, X_3, X_4)$ à respecter en au moins un emplacement de contrôle (A,B,C,D) déterminé pour obtenir un positionnement optimal de la tôle (1,10) dans l'outil (2), ledit emplacement (A,B,C,D) étant disposé en amont de l'outil (2) juste avant ce dernier ;

— c) on réalise une image d'au moins un bord (17) de la tôle (1,10) à chacun dudit au moins un emplacement de contrôle déterminé (A,B,C,D) ;

— d) on superpose sur chaque image un repère $(S_1, S_2, S_3, S_4)$ représentant l'écart transversal $(X_1, X_2, X_3, X_4)$ calculé pour l'emplacement de contrôle considéré ; et

— e) l'opérateur positionne la tôle en utilisant les images précitées et en agissant sur les organes de positionnement.

Application aux cisailles de découpage de rives.

FIG 2

La présente invention concerne un procédé destiné à positionner une tôle dans une installation de traitement en ligne comportant des organes de déplacement longitudinal de la tôle et des organes de positionnement transversal de cette tôle actionnés par un opérateur ; ce positionnement s'effectue devant un outil réalisant une opération déterminée sur la tôle, tel qu'une cisaille de découpage de rives, une machine de contrôle par ultrasons ou une marqueuse.

Dans le cas d'une cisaille de découpage de bords ou rives de tôle, il est nécessaire tout d'abord de vérifier que la tôle qui se présente devant la machine est inscriptible, c'est-à-dire que son profil est compatible avec le traitement de découpe qui va être effectué dans la cisaille ; par ailleurs il est nécessaire de positionner cette tôle de manière optimale en fonction du profil de ses bords.

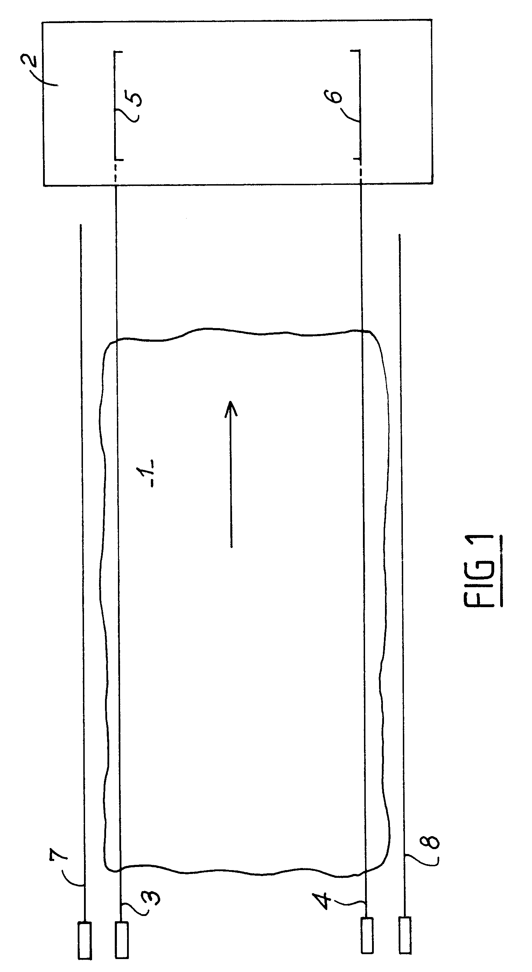

Actuellement, comme cela est illustré sur la figure 1, le positionnement de la tôle est réalisé par un opérateur qui dispose des repères constitués par des faisceaux laser qui sont envoyés sur la tôle 1 à distance relativement importante en amont de la cisaille 2, la tôle se déplaçant de la gauche vers la droite. Les repères sont constitués par deux faisceaux laser "fil de lame" 3 et 4 qui visualisent pour l'opérateur qui est situé loin en amont de la cisaille 2 l'alignement des lames 5 et 6 de la cisaille. Deux autres repères "hortout" 7 et 8 visualisent pour l'opérateur l'encombrement maximal que peut présenter la tôle dans l'outil.

L'opérateur qui est disposé à une distance qui peut être de 40 mètres en amont de la cisaille utilise ces quatre repères laser pour commander des organes de positionnement de la tôle 1 devant la cisaille 2.

La précision d'un tel procédé est médiocre ; elle est généralement limitée à deux à trois centimètres car elle dépend tout d'abord de la précision de réglage de position des faisceaux laser et de l'épaisseur du rayon laser constituant le repère ; par ailleurs, compte tenu de la distance à laquelle l'opérateur se trouve par rapport à la cisaille 2 et également des conditions de visibilité, la précision est obligatoirement réduite et la fiabilité de ce procédé est relativement faible.

Dans le cas de tôles déjà découpées en sections ou tronçons, l'opérateur doit tout d'abord déterminer si la tôle est inscriptible, c'est-à-dire si le profil des bords de la tôle est compatible avec la distance séparant les deux lames, c'est-à-dire si la tôle peut s'inscrire au-delà des deux repères "fil de lame" 3 et 4 sur toute sa longueur.

Cette opération de détection de l'inscriptibilité est difficile à réaliser compte tenu des conditions décrites plus haut et l'opérateur peut être amené à laisser passer dans la cisaille des tôles non inscriptibles et provoquer des incidents pour la machine ou le produit (casses ou rebuts) ou encore à ne pas laisser passer des tôles inscriptibles, ce qui entraîne des pertes d'exploitation (retraitement des tôles, faux rebuts).

La présente invention se propose de fournir un procédé de positionnement de tôles qui permet d'obtenir une précision et une fiabilité fortement accrues.

L'invention a pour objet un procédé de positionnement d'une tôle devant un outil dans une installation de traitement en ligne comportant des organes de déplacement longitudinal de la tôle dans l'outil et des organes de positionnement transversal de la tôle devant l'outil actionnés par un opérateur, caractérisé en ce que l'on réalise les étapes suivantes:

– a) dans une première opération, on mesure le contour longitudinal de la tôle au moyen d'une jauge de forme en amont dudit outil ;

– b) dans une seconde opération, à partir des mesures effectuées par la jauge de forme, on calcule des écarts transversaux à respecter en au moins un emplacement de contrôle déterminé pour obtenir un positionnement optimal de la tôle dans l'outil, ledit emplacement étant disposé en amont de l'outil juste avant ce dernier ;

– c) on réalise une image d'au moins un bord de la tôle à chacun dudit au moins un emplacement de contrôle déterminé ;

– d) on superpose sur chaque image un repère représentant l'écart transversal calculé pour l'emplacement de contrôle considéré ; et

– e) l'opérateur positionne la tôle en utilisant les images précitées et en agissant sur les organes de positionnement.

Ce procédé permet en particulier à l'opérateur d'avoir une très bonne vision de la tôle lorsqu'elle se trouve juste devant l'outil au niveau des organes de positionnement transversal ; le calcul des écarts transversaux à respecter permet d'obtenir une précision bien meilleure car l'opérateur n'a plus qu'à faire coïncider des repères.

Selon une autre caractéristique de l'invention, les écarts transversaux sont calculés pour un seul bord de la tôle et on réalise une image du même bord de la tôle.

L'invention permet de mesurer le contour longitudinal de la tôle à un emplacement très éloigné de l'outil en amont de celui-ci, ce qui permet d'obtenir une bonne position même dans le cas d'une vitesse de déplacement élevée de la tôle.

Dans le cas d'une tôle se présentant sous forme de sections ou tronçons successifs, lors de l'étape (b) on calcul si le profil de la section de tôle est compatible avec le traitement réalisé par l'outil et, si cela n'est pas le cas, on commande la mise au rebut de la section de tôle considérée. Grâce à l'invention, les mises au rebut sont seulement limitées aux tôles qui ne sont pas inscriptibles dans le cas d'une découpe de rives.

Avantageusement, les images des différents emplacements de contrôle sont visualisées sur un même écran de visualisation, ce qui permet à l'opérateur d'avoir une vision globale de la tôle lorsqu'elle se présente devant l'outil.

L'invention a également pour objet un dispositif pour la mise en oeuvre du procédé précité, caractérisé en ce qu'il comporte une jauge de forme située en amont de l'outil, un calculateur recevant les résultats fournis par ladite jauge de forme, des caméras de contrôle visant chacune un des emplacements de contrôle et au moins un écran de visualisation recevant l'image d'au moins une caméra de contrôle et un signal de repère fourni par le calculateur.

Avantageusement, la jauge de forme est constituée par une caméra linéaire du type à éléments photosensibles à transfert de charges (CCD).

Selon une autre caractéristique de l'invention, le dispositif comporte un échantillonneur vidéo recevant les signaux fournis par les caméras de contrôle et fournissant des signaux de visualisation des images des caméras sur un seul écran de visualisation.

L'invention sera mieux comprise à l'aide de la description qui va suivre, donnée uniquement à titre d'exemple et faite en se référant aux dessins annexés sur lesquels :

– la figure 1 est une figure illustrant la technique connue ;

– la figure 2 est un schéma général expliquant le procédé selon l'invention ;

– les figures 3 à 5 sont des figures expliquant le fonctionnement du calculateur ; et

– la figure 6 représente un écran de visualisation.

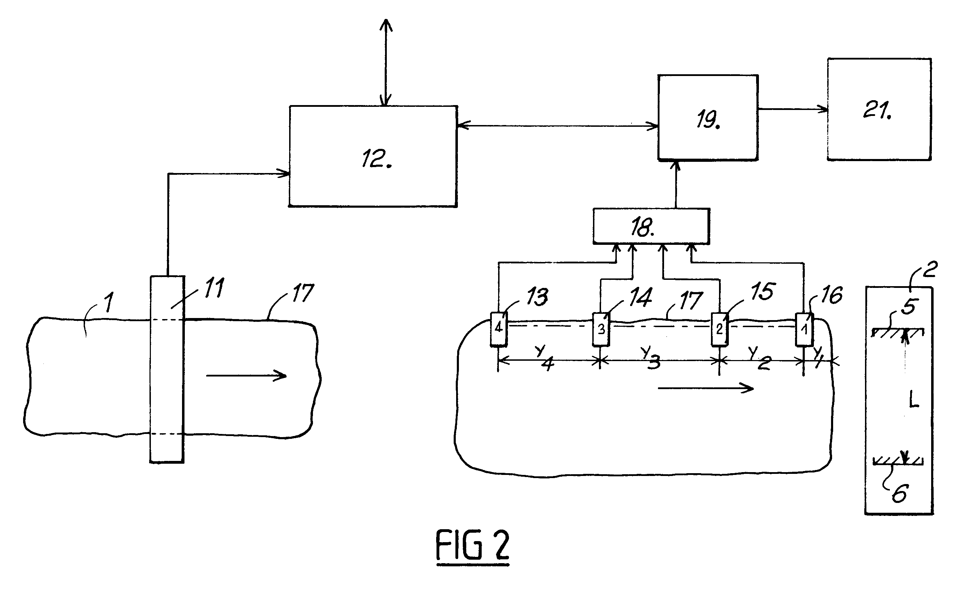

La figure 2 illustre de manière générale le procédé selon l'invention. Un tôle 1 qui subit un traitement en ligne doit passer dans un outil tel qu'une cisaille de découpage de rives 2 dont les lames sont repérées en 5 et 6. La tôle 1 peut se présenter sous forme continue ou sous forme de sections ou tronçons de longueur déterminée.

La première opération consiste à mesurer le contour longitudinal de la tôle en amont de l'outil 2. Ceci est réalisé au moyen d'une jauge de forme 11 devant laquelle défile la tôle 1.

Cette jauge de forme qui peut être constituée par exemple par une caméra linéaire de type CCD, c'est-à-dire comportant des éléments photosensibles à transfert de charges, détecte le bord ou la rive de la tôle 1 lorsque celle-ci défile devant la caméra.

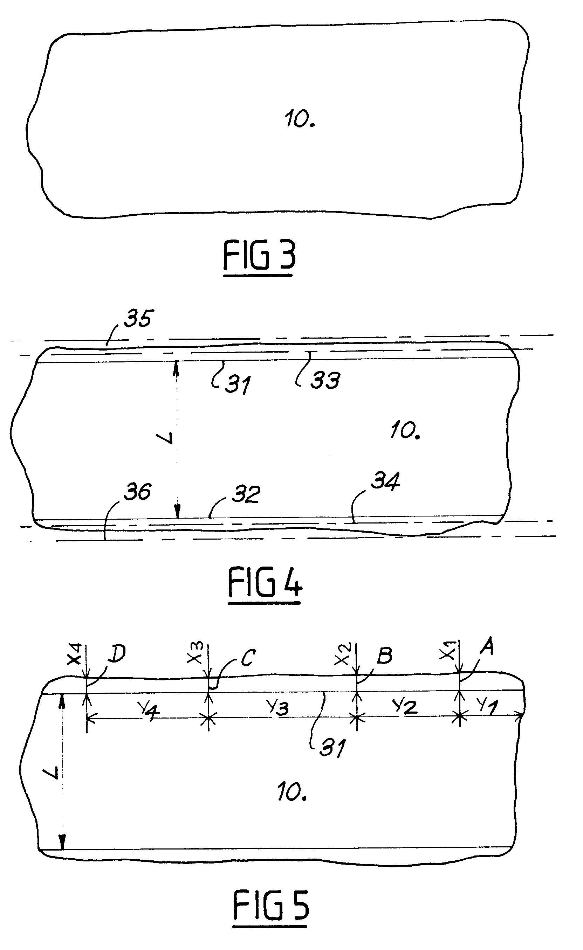

Les données fournies par la jauge linéaire 11 sont envoyées à un calculateur 12 dans lequel, comme cela sera expliqué plus bas en regard des figures 3 à 5, on calcule des écarts transversaux qui doivent être respectés en des emplacements de contrôle qui sont disposés en amont de l'outil 2 juste avant ce dernier. Ces écarts transversaux sont des valeurs de consigne calculées pour que la tôle 1 soit positionnée de manière optimale lorsqu'elle se présente devant l'outil 2.

Dans l'exemple représenté, les emplacements de contrôle sont au nombre de quatre et disposés sur un seul bord de la tôle 1 ; au niveau de chacun de ces emplacements de contrôle, on dispose une caméra 13,14,15,16 qui fournit une image du bord 17 de la tôle à ces quatre emplacements de contrôle.

Sur l'image de la rive de tôle obtenue à chaque emplacement de contrôle, on superpose un repère représentant l'écart transversal calculé par le calculateur 12 pour cet emplacement de contrôle. L'opérateur visionne donc le bord 17 de la tôle 1 non pas directement, mais sur un écran, ce qui lui permet d'opérer dans de bonnes conditions, en particulier en ce qui concerne la visibilité ; l'opérateur agit sur les organes de positionnement transversal de la tôle (non représentés) de manière à faire coïncider l'image du bord de la tôle avec le repère calculé correspondant.

Dans le dispositif représenté les images fournies par les caméras 13 à 16 sont envoyées à un échantillonneur vidéo 18 qui permet de visualiser les images fournies par les quatre caméras 13 à 16 sur un seul écran. Le signal de sortie de cet échantillonneur 18 est envoyé à un microprocesseur 19 qui commande en particulier un écran 21. Ce microprocesseur 19 reçoit par ailleurs des données concernant les repères calculés par le calculateur 12 et commande l'affichage sur l'écran 21 des images des caméras 13 à 16 et des repères calculés par le calculateur 12.

Les figures 3 à 5 illustrent les calculs effectués par le calculateur 12 dans le cas d'un tronçon de tôle 10 dont le contour est représenté à la figure 3.

Conformément à l'invention, le calculateur vérifie d'abord l'inscriptibilité de la tôle 10, c'est-à-dire qu'il vérifie que le profil de la tôle est compatible avec le traitement réalisé dans l'outil 2. Dans le cas particulier d'une cisaille de découpage de rives, il faut tout d'abord vérifier que l'on peut trouver dans la tôle un lé inimterrompu dont la largeur L correspond à la largeur de coupe de la cisaille 2, c'est-à-dire à la distance de ces deux lames 5 et 6.

Par ailleurs il faut vérifier que les bords dépassant au-delà de ce gabarit ne dépassent pas une surlargeur maximale acceptée par l'outil 2.

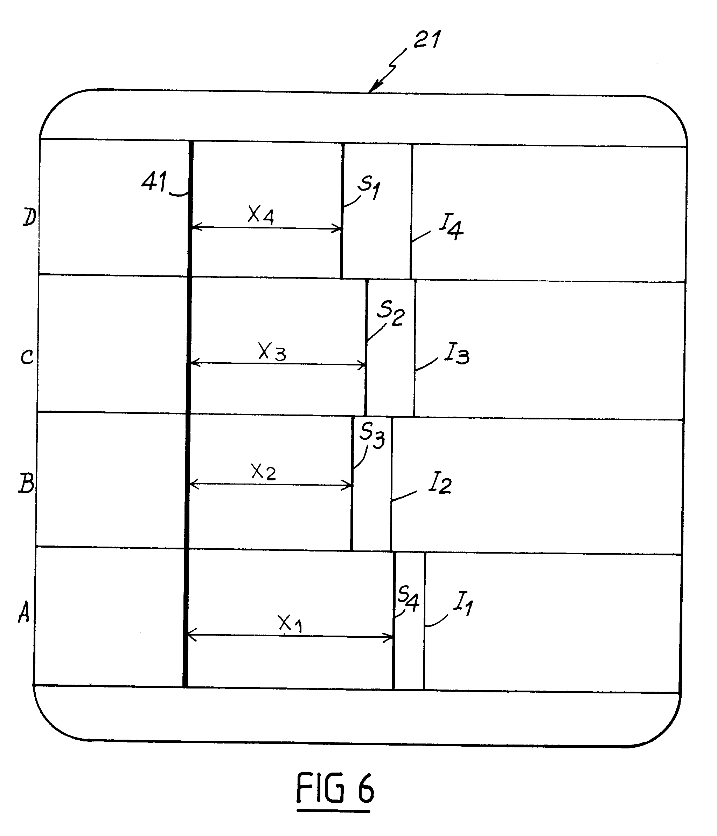

Ce calcul de l'inscriptibilité est illustré par la figure 4. A partir du profil mesuré par la jauge 1 et représenté sur la figure 3, le calculateur 12 détermine tout d'abord deux lignes parallèles 31 et 32 déterminant la largeur de coupe, puis à l'extérieur de ces deux lignes deux autres lignes parallèles 33 et 34 qui correspondent à la surlargeur minimale pour assurer une bonne opération de cisaillage. Enfin, le calculateur détermine deux autres lignes 35 et 36 qui correspondent à la surlargeur maximale admissible par l'outil. En déplaçant l'image de la tôle transversalement par rapport à ses différentes lignes, le calculateur détermine si la tôle 10 est inscriptible, c'est-à-dire que chacun de ses bords est compris entre les lignes déterminant les surlargeurs minimale et maximale 33 et 35 respectivement 34 et 36. Si cette condition n'est pas réalisée, la tôle est déclarée non inscriptible et traitée différemment.

Cette opération de détermination de l'inscriptibilité est réalisée avec une précision importante et elle permet d'éviter d'envoyer dans l'outil 2 des tôles présentant des sections trop étroites pour pouvoir subir le traitement effectué par l'outil ou présentant des sections trop larges non admissibles par l'outil.

La figure 5 illustre le calcul effectué ensuite par le calculateur 12. Il consiste à calculer des écartements devant être respectés en des emplacements de contrôle. Avantageusement, ce calcul n'est effectué que pour un seul bord 17 de la tôle 10.

Les différents emplacements de contrôle A,B,C,D sont déterminés par leurs distances Y à l'extrémité aval de la tôle 10 ; les quatre emplacements A,B,C,D sont déterminés respectivement par les distances $Y_1, Y_2, Y_3, Y_4$. A chacun de ces emplacements, le calculateur calcule l'écart X correspondant du bord de la tôle par rapport à la ligne 31 déterminant la largeur de coupe. On obtient ainsi les valeurs $X_1, X_2, X_3, X_4$. Comme on peut le voir sur la figure 2, lorsque la tôle se présente juste devant l'outil, elle est disposée de telle manière que les caméras 13 à 16 visent les emplacements de contrôle déterminés par les distances $Y_1, Y_2, Y_3, Y_4$ et en fournissent une image.

La figure 6 représente l'écran 21 sur lequel on affiche pour l'opérateur les images fournies par les quatre caméras précitées.

Conformément à l'invention, on superpose, par exemple par incrustation vidéo, un premier repère 41 qui correspond à la largeur de coupe, c'est-à-dire au repère "fil de lame". Grâce à l'échantillonneur vidéo 18, les images des quatre caméras sont disposées les unes au-dessus des autres sur l'écran 21 ; on dispose par exemple l'une au-dessous de l'autre les images fournies par les caméras 13 à 16, c'est-à-dire les images des emplacements de contrôle D à A. L'image du bord pour chaque emplacement de contrôle est représentée par un segment de droite $I_4$, respectivement $I_3, I_2$ et $I_1$.

Les données fournies par le calculateur et correspondant aux écarts $X_1$ à $X_4$ sont également affichées sur chacune des images fournies par les caméras 13 à 16 sous la forme d'un segment superposé par incrustation vidéo $S_1$ à $S_4$.

L'opérateur qui est placé devant l'écran 21 a une vision très précise de la position réelle de la tôle 10 et il peut agir sur les organes de positionnement latéral de manière à faire coïncider du mieux possible l'image fournie par les quatre caméras avec les segments $S_1$ à $S_4$ correspondant aux écarts de consigne calculés par le calculateur 12.

On voit que l'invention permet tout d'abord d'assurer une bonne sélection d'inscriptibilité des tôles, si bien que l'on évite de faire passer inutilement des tôles trop étroites dans la cisaille et que l'on évite des incidents dûs à des tôles trop larges.

Par ailleurs, du fait que l'opérateur a une vision très précise de la position de la tôle, le positionnement est réalisé de manière plus précise et plus fiable, ce qui améliore encore le rendement global de l'installation.

## Revendications

1. Procédé de positionnement d'une tôle (1,10) devant un outil (2) dans une installation de traitement en ligne comportant des organes de déplacement longitudinal de la tôle et des organes de positionnement transversal de la tôle (1,10) devant l'outil (2) actionnés par un opérateur, caractérisé en ce que l'on réalise les étapes suivantes:

   – a) dans une première opération, on mesure le contour longitudinal de la tôle (1,10) au moyen d'une jauge de forme (11) en amont de l'outil (2) ;

   – b) dans une seconde opération, à partir des mesures effectuées par la jauge de forme, on calcule des écarts transversaux $(X_1, X_2, X_3, X_4)$ à respecter en au moins un emplacement de contrôle (A,B,C,D) déterminé pour obtenir un positionnement optimal de la tôle (1,10) dans l'outil (2), ledit emplacement (A,B,C,D) étant disposé en amont de l'outil (2) juste avant ce dernier ;

   – c) on réalise une image d'au moins un bord (17) de la tôle (1,10) à chacun dudit au moins un emplacement de contrôle déterminé (A,B,C,D) ;

   – d) on superpose sur chaque image un repère $(S_1, S_2, S_3, S_4)$ représentant l'écart transversal $(X_1, X_2, X_3, X_4)$ calculé pour l'emplacement de contrôle considéré ; et

   – e) l'opérateur positionne la tôle en utilisant les images précitées et en agissant sur les organes de positionnement.

2. Procédé de positionnement d'une tôle devant un outil selon la revendication 1, caractérisé en ce que les écarts transversaux $(X_1, X_2, X_3, X_4)$ sont calculés pour un seul bord (17) de la tôle (1, 10) et en ce que l'on réalise une image du même bord (17) de la tôle.

3. Procédé de positionnement d'une tôle devant un outil selon la revendication 1 ou 2, caractérisé en ce que l'on calcule les écarts transversaux $(X_1, X_2, X_3, X_4)$ et que l'on réalise l'image pour quatre emplacements de contrôle (A,B,C,D).

4. Procédé de positionnement d'une tôle devant un outil selon l'une quelconque des revendications 1 à 3, caractérisé en ce que l'on mesure le contour longitudinal de la tôle (1,10) à un emplacement très éloigné de l'outil en amont de celui-ci par rapport au déplacement de la tôle.

5. Procédé de positionnement de tôle devant un outil selon l'une quelconque des revendications 1 à 4, caractérisé en ce que, dans le cas d'une tôle se présentant sous forme de sections ou tronçons successifs, lors de l'étape (b), on calcule si le profil de la section de tôle (10) est compatible avec le traitement réalisé par ledit outil (2) et en ce que, si ce n'est pas le cas, on traite la tôle différemment.

6. Procédé de positionnement de tôle devant un outil selon l'une quelconque des revendications 1 à 5, caractérisé en ce que les images des différents emplacements de contrôle (A,B,C,D) sont visualisées sur un même écran de visualisation (21).

7. Procédé de positionnement de tôle devant un outil selon l'une quelconque des revendications 1 à 6, caractérisé en ce que le repère est constitué par un segment de droite $(S_1, S_2, S_3, S_4)$.

8. Dispositif pour la mise en oeuvre du procédé selon l'une quelconque des revendications 1 à 6, caractérisé en ce qu'il comporte une jauge de forme (11) située en amont de l'outil (2), un calculateur (12) recevant les résultats fournis par ladite jauge de forme, des caméras de contrôle (13-16) visant chacune un des emplacements de contrôle (A,B,C,D) et au moins un écran de visualisation (21) recevant l'image d'au moins une caméra de contrôle et un signal de repère fourni par le calculateur (12).

9. Dispositif selon la revendication 7, caractérisé en ce que la jauge de forme (11) est constituée par une caméra linéaire du type à éléments photosensibles à transfert de charges (CCD).

10. Dispositif selon la revendication 7 ou 8, caractérisé en ce qu'il comporte un échantillonneur vidéo (18) recevant les signaux fournis par les caméras de contrôle (13-16) et fournissant des signaux de visualisation des images des caméras sur un seul écran de visualisation (21).

FIG 1

EP 0 491 588 A1

EP 0 491 588 A1

12.

19.

21.

18.

1  11  17

13  14  17  15  16

4  3  2  1

$Y_4$  $Y_3$  $Y_2$  $Y_1$

2

5

L

6

FIG 2

FIG 3

FIG 4

FIG 5

FIG 6

Office européen
des brevets

**RAPPORT DE RECHERCHE EUROPEENNE**

Numero de la demande

EP    91 40 3198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | PATENT ABSTRACTS OF JAPAN vol. 015, no. 356 (P-1249)9 Septembre 1991 & JP-A-3 137 706 ( HOKKAI CAN CO LTD ) 12 Juin 1991 * abrégé * | 1 | B23D31/04 B23D33/02 |
| X | SOVIET INVENTIONS ILLUSTRATED Section PQ, Week E19, Derwent Publications Ltd., London, GB; Class P54, Page 33, AN F5558 & SU-A-848 190 ( KALASHNIKOV) | 1 | |
| Y | * abrégé * | 2,3 | |
| A | | 6,8 | |
| Y | FR-A-2 204 986 (CREUSOT-LOIRE) * page 1, ligne 1 - page 2, ligne 39; figures 5-11 * | 2,3 | |
| A | FR-A-1 574 815 (J.J.CARNAUD & FORGES DE BASSE INDRE) * page 1, ligne 35 - ligne 42; figure * | 4 | |
| A | PATENT ABSTRACTS OF JAPAN vol. 10, no. 336 (M-535)(2392) 14 Novembre 1986 & JP-A-61 142 012 ( MITSUBISHI HEAVY IND. LTD. ) 28 Juin 1986 * le document en entier * | 5 | |

DOMAINES TECHNIQUES RECHERCHES (Int. Cl.5)

B23D
B07C

Le présent rapport a été établi pour toutes les revendications

| Lieu de la recherche | Date d'achèvement de la recherche | Examinateur |
|---|---|---|
| LA HAYE | 20 MARS 1992 | VAGLIENTI G.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)